# EUROPÄISCHE PATENTANMELDUNG

(11) **EP 1 043 188 A2**
(43) Veröffentlichungstag der Anmeldung: **11.10.2000**
(21) Anmeldenummer: 00107567.0
(22) Anmeldetag: 07.04.2000
(51) Int. Cl.: B60P 7/15, B60P 1/00

(54) **Einbau für den Laderaum eines Transportfahrzeugs oder -behälters**

(30) Priorität: 09.04.1999 DE 29906129 U
(71) Anmelder: Load-Lok Deutschland Gmbh, 48683 Ahaus (DE)
(72) Erfinder: Thieme, Jürgen, 48683 Ahaus (DE)
(74) Vertreter: Linnemann, Winfried

(57) **Zusammenfassung**

Die Erfindung betrifft einen Einbau (10) für den Laderaum eines Transportfahrzeugs oder -behälters, wie Lastkraftwagen, LKW-Anhänger, Sattelauflieger, Container, Wechselbrücke oder -pritsche oder Eisenbahnwaggon, mit einem Laderaumboden (11) und mit einem von diesem randseitig aufragenden Gestell oder Aufbau (12, 12', 13) mit mehreren vertikalen Streben oder Rungen, die an ihren zum Laderaum weisenden Seiten mit oder als Führungsschienen (1) ausgebildet sind, insbesondere zur Verwendung in geschlossenen Transportfahrzeugen oder -behältern.

Der neue Einbau ist dadurch gekennzeichnet, daß der Einbau (10) mindestens eine allgemein rechteckige Ladeplattform (2) umfaßt, die an den sich über den Laderaum gegenüberliegenden Führungsschienen (1) in vorwählbaren Höhenpositionen lösbar verriegelbar ist.

## Beschreibung

Die vorliegende Erfindung betrifft einen Einbau für den Laderaum eines Transportfahrzeugs oder -behälters, wie Lastkraftwagen, LKW-Anhänger, Sattelauflieger, Container, Wechselbrücke oder -pritsche oder Eisenbahnwaggon, mit einem Laderaumboden und mit einem von diesem randseitig aufragenden Gestell oder Aufbau mit mehreren vertikalen Streben oder Rungen, die an ihren zum Laderaum weisenden Seiten mit oder als Führungsschienen ausgebildet sind, insbesondere zur Verwendung in geschlossenen Transportfahrzeugen oder -behältern.

Ein derartiger Einbau ist als Pritsche-Plane-Aufbau aus dem DE-U-298 01 555 bekannt. Der dort beschriebene Aufbau ist dadurch gekennzeichnet, daß seitliche Rungen an ihren aufeinander zu weisenden Seiten mit oder als Ankerschienen ausgeführt sind, an denen jeweils zwei benachbarte Rungen verbindende, horizontal verlaufende Außen-Ladebalken in Vertikalrichtung verstellbar und arretierbar gehaltert sind, und daß die Außen-Ladebalken an ihrer zum Aufbau-Inneren weisenden Seite mit oder als Ankerschiene ausgeführt sind, an denen jeweils zwei einander gegenüberliegende Außen-Ladebalken verbindende, horizontal quer durch den Aufbau verlaufende Innen-Ladebalken in Horizontalrichtung verstellbar und arretierbar gehaltert sind.

Wenn sich der Aufbau nach dem Stand der Technik auch durchaus bewährt hat, so wird es doch als Nachteil empfunden, daß nur eine Ladeebene, nämlich die Ladepritsche, zur Verfügung steht, wobei die Ladebalken zur Sicherung von großen Stücken der Ladung geeignet sind. Auf in gleicher Höhe angebrachten Ladebalken können auch Paletten oder sonstige feste und ausreichend großflächige Transportgüter aufgesetzt werden. Es ist mit dem Aufbau nach diesem Stand der Technik jedoch nicht möglich, eine zweite Ladeebene aufzubauen, auf der eine Vielzahl von kleineren Gütern, z.B. Paketen, ablegbar ist.

Aus dem praktischen Betrieb ist auch noch ein System bekannt, bei dem an den Fahrzeugseitenwänden im Laderaum um horizontale Achsen verschwenkbare Zwischenböden angelenkt sind. Bei Nichtgebrauch liegen diese Zwischenböden parallel zur Seitenwand unmittelbar vor dieser. Nachteilig ist hierbei aber, daß bei Nichtgebrauch der Zwischenböden diese die Breite des Laderaums vermindern, was ungünstig ist, weil die Laderaumbreite genormt ist und für genormte Transportbehältnisse oder Paletten passend ist. Jeder Verlust an Laderaumbreite behindert oder verhindert sogar eine normgerechte, optimale Ausnutzung des Laderaums. Die verschwenkbaren Zwischenböden wurden deshalb möglichst dünn ausgeführt, was aber auf Kosten ihrer Tragfähigkeit geht.

Es ist deswegen die Aufgabe der vorliegenden Erfindung, einen Einbau zur Schaffung mindestens einer zusätzlichen Ladefläche anzugeben, auf der einerseits auch kleinteilige Gutstücke, wie Pakete, ablegbar sind und wobei andererseits bei Nichtnutzung der zusätzlichen Ladefläche eine Nutzung des Laderaums in seiner vollen Breite möglich ist.

Die Lösung der Aufgabe erfolgt mit einem gattungsgemäßen Einbau mit den kennzeichnenden Merkmalen des Patentanspruchs 1.

Vorteilhaft kann dadurch, daß der Einbau mindestens eine allgemein rechteckige Ladeplattform umfaßt, die an den sich über den Laderaum gegenüberliegenden Führungsschienen in vorwählbaren Höhenpositionen lösbar verriegelbar ist, bei Bedarf leicht eine zusätzliche Ladeebene geschaffen werden, deren Position im Laderaum zweckentsprechend wählbar und leicht veränderbar ist. Es können auch mehrere Ladeplattformen über- oder nebeneinander zur Schaffung von mehreren Zwischenböden eingesetzt werden. Bei Nichtgebrauch können die Ladeplattformen aus dem Laderaum ausgebaut oder vorteilhaft ganz nach oben verschoben und dort verriegelt werden, sodaß sie den Laderaum lediglich in seiner Höhe geringfügig verkleinern, was in der Praxis meist nicht störend ist.

Weiter wird vorgeschlagen, daß zusätzlich zu den vertikalen Führungsschienen quer verlaufende horizontale Führungsschienen am Laderaumboden und an einer Laderaumdecke vorgesehen sind, die sich mit den einander gegenüberliegenden vertikalen Führungsschienen jeweils zu einer geschlossenen, in einer vertikalen Ebene umlaufenden Führungsschienen-Anordnung ergänzen. Dies erlaubt die Anordnung von Ladeplattformen in einer vertikalen Ausrichtung, womit eine Unterteilung des Laderaums in Abteile ermöglicht wird.

In weiterer Ausgestaltung bildet dabei vorzugsweise jede Führungsschienen-Anordnung ein Quadrat. Dadurch können identische Ladeplattformen sowohl horizontal wie auch vertikal eingebaut und an zwei einander gegenüberliegenden Seiten mit den Führungsschienen verriegelt werden.

Um eine leichte und zugleich stabile, von einer einzelnen Person handhabbare Ladeplattform zu schaffen, ist vorgesehen, daß die Ladeplattform eine oberseitige oder je eine oberseitige und unterseitige flache Platte und zwei diese tragende Träger aufweist, die parallel zueinander und nahe und parallel zu zwei einander gegenüberliegenden, in Einbau-Querrichtung verlaufenden Kanten der Ladeplattform angeordnet sind und die an ihren Enden jeweils mit den Führungsschienen verriegelbar sind.

Wenn besonders schwere Lasten von der Ladeplattform aufgenommen werden sollen, können zusätzlich zwischen den Trägern mehrere diese verbindende Streben angebracht sein.

Um für Fahrzeuge mit verschiedenen Laderaumbreiten nicht verschiedene Ladeplattformen herstellen und vorhalten zu müssen, sind zweckmäßig die Träger in ihrer Länge teleskopierbar und in vorwählbaren Längenpositionen festlegbar. In einer einfachen Lösung ist vorgesehen, daß zwei profilierte Träger in einem Rechteckprofil verschiebbar und durch Schrauben und Langlöcher variabel festlegbar sind.

Weiter schlägt die Erfindung vor, daß in Längsrichtung des Einbaus gesehen in einem Rasterabstand 1 jeweils zwei parallele Führungsschienen mit je einer Reihe von Verriegelungsöffnungen oder jeweils eine Führungsschiene mit je zwei parallelen Reihen von Verriegelungsöffnungen angeordnet sind/ist, wobei Verriegelungsnasen an den Enden der Träger der Ladeplattform mit den Verriegelungsöffnungen in Eingriff bringbar sind. So wird erreicht, daß an den Führungsschienen jeweils zwei oder mehr Ladeplattformen in einer Ebene und einander unmittelbar benachbart angebracht werden können, ohne daß sie sich gegenseitig behindern und ohne daß Spalten zwischen den Ladeplattformen entstehen.

Um den Laderaum möglichst optimal auszunutzen, ist bevorzugt vorgesehen, daß die Länge L des Laderaums ein ganzes Vielfaches des Rasterabstands 1 beträgt, daß die Länge jeder Ladeplattform mit dem Rasterabstand 1 übereinstimmt und daß jede Ladeplattform an ihren den Führungsschienen zugewandten Ecken mit den Führungsschienen verriegelbar ist. Damit verbleibt im Laderaum kein Bereich, in dem nicht eine Ladeplattform angeordnet werden kann.

Damit eine einzelne Person eine Ladeplattform leicht ver- und entriegeln und in der Höhe verstellen und festlegen kann, sind zweckmäßig die Verriegelungsnasen jeweils Teil eines Verriegelungsmechanismus und die beiden benachbarten Verriegelungsmechanismen einer Seite jeder Ladeplattform mit einem unter oder in dieser verlaufenden Betätigungselement zur gemeinsamen Ver- und Entriegelung verbunden. Für den erfindungsgemäßen Einbau kann ein als solcher bekannter Verriegelungsmechanismus verwendet werden. In einer einfachen Ausführung ist die Verriegelungsnase durch einen Winkelhebel, an dem eine Stange als Betätigungselement angreift, gegen eine Federkraft zurückziehbar. Ohne Ausübung einer Betätigungskraft wird die Verriegelungsnase durch die Federkraft wieder nach vorne und in die Öffnung gedrückt, was der Verriegelungsstellung entspricht.

Um ein seitenweise getrenntes und aufeinanderfolgendes Verstellen der Ladeplattform in den Führungsschienen und ein leichtes Herausnehmen der Ladeplattform aus den Führungsschienen zu ermöglichen, sind vorzugsweise jeweils die Verriegelungsmechanismen, die an einer Seitenkante der Ladeplattform angeordnet sind, um eine entlang dieser Seitenkante der Ladeplattform verlaufende gemeinsame Achse A in einem Winkelbereich von wenigstens 90° verschwenkbar an dem Träger angebracht. So wird es möglich, daß eine Bedienungsperson nach Lösen der einen Seite die Ladeplattform zunächst einseitig anzuheben oder abzusenken und dann auf der anderen Seite nachzuführen. Auch das Herausnehmen einer Ladeplattform aus den Führungsschienen ist so vereinfacht.

Eine weitere Ausgestaltung sieht vor, daß die Verriegelungsmechanismen mit ihrer Verriegelungsnase so geformt sind, daß sie in wenigstens zwei um 90° gegeneinander verdrehten Stellungen mit den Führungsschienen in Eingriff bringbar sind. Hierdurch werden vorteilhaft weitere Anbringungs- und Anordnungsmöglichkeiten für die Ladeplattformen im Einbau geschaffen, was die Variabilität und den Nutzwert weiter erhöht. Beispielsweise besteht nun die Möglichkeit, eine Ladeplattform als verschwenkbare Tür im Laderaum anzubringen, ohne daß dafür weitere Hilfsmittel nötig werden.

Eine noch größere Flexibilität bei der Gestaltung und der Aufteilung des Laderaums wird durch eine Ausführung des Einbaus erreicht, bei der mindestens eine Ladeplattform entlang einer in Einbau-Längsrichtung verlaufenden Mittellinie in zwei Teile geteilt ist und die beiden Teile der Ladeplattform an der Mittellinie über Verriegelungsmittel lösbar miteinander verbindbar oder über wenigstens ein Scharnier gelenkig miteinander verbunden sind. Damit können die Teile der geteilten Ladeplattform je nach den aktuellen Bedürfnissen voneinander getrennt und/oder in unterschiedlicher Ausrichtung im Laderaum angeordnet werden.

Um auch die geteilte Ladeplattform mit schwereren Gutstücken belasten zu können, wird vorgeschlagen, daß die beiden Teile der Ladeplattform an oder nahe der Mittellinie über jeweils individuelle oder gemeinsame, längeneinstellbare und verschwenkbare und/oder abnehmbare Beine abstützbar sind. Zweckmäßig sind die Beine paarweise genau unter der Mittellinie plaziert und mit einem der beiden Plattformteile gelenkig verbunden, sodaß sie wahlweise den einen oder beide Teile der geteilten Ladeplattform unterstützen können. Die Längenverstellbarkeit der Beine stellt die gewünschte Freiheit bei der Höheneinstellung der Ladeplattformteile sicher. Durch ihre Verschwenkbarkeit können die Beine bei Nichtgebrauch an die Ladeplattform angelegt werden, wo sie nicht oder kaum störend sind.

Bevorzugt ist zur Gewichtsminimierung die Platte eine Blechplatte, vorzugsweise aus einer Aluminium-Legierung, oder eine Kunststoffplatte, vorzugsweise eine Kunststoff-Wabenplatte.

Ausführungsbeispiele der Erfindung werden nunmehr anhand einer Zeichnung näher erläutert. Die Figuren der Zeichnung zeigen:
- Figur 1: eine erste Ladeplattform in Unteransicht,
- Figur 2: die Ladeplattform aus Figur 1 in Seitenansicht,
- Figur 3: eine Führungsschiene in Draufsicht,
- Figur 4: die Führungsschiene aus Figur 3 in Stirnansicht,
- Figur 5: einen Ausschnitt aus einem Einbau in schematischer perspektivischer Darstellung mit drei parallel im Abstand zueinander verlaufenden Führungsschienen und zwei daran gehalterten Ladeplattformen,
- Figur 6: einen Ausschnitt aus einem Einbau in schematischer perspektivischer Darstellung mit einer Ladeplattform in Parkstellung,
- Figur 7: den Einbau in gleicher Darstellung wie in Figur 6, nun mit einer vertikal angeordneten Ladeplattform als Trennwand,
- Figur 8: den Einbau in gleicher Darstellung wie in Figur 6, nun mit einer geteilten Ladeplattform in Benutzungsstellung,
- Figur 9: den Einbau gemäß Figur 8, nun mit einem in eine vertikale Stellung gebrachten Teil der geteilten Ladeplattform, und
- Figur 10: den Einbau gemäß Figur 8 und 9, nun mit in seitliche Parkstellungen gebrachten Teilen der geteilten Ladeplattform.

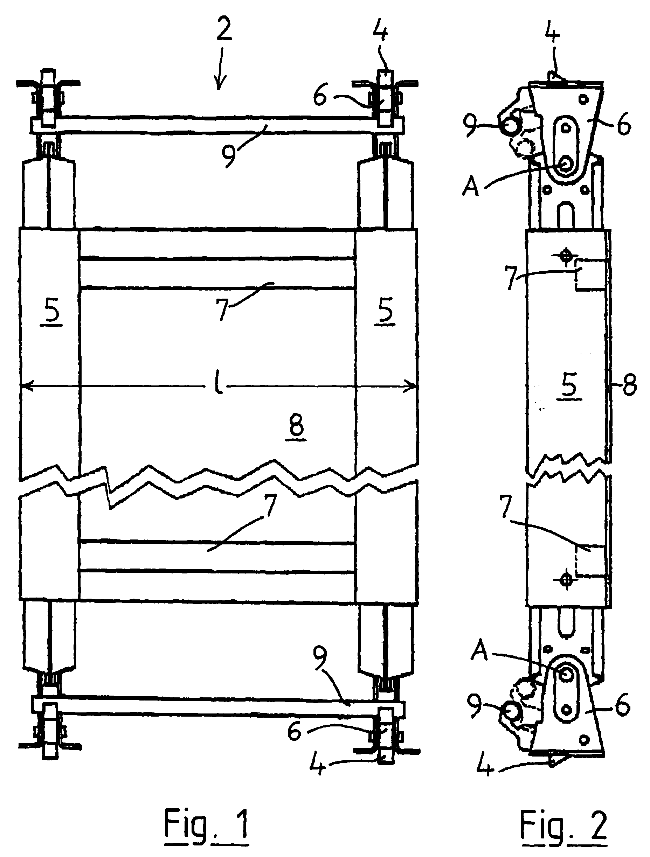

In Figur 1 ist eine Ladeplattform 2 dargestellt, die eine Länge 1 aufweist. Quer zur Länge 1 verlaufen zwei Träger 5 an den beiden Rändern einer auf den Trägern 5 befestigten Platte 8, wobei zwischen den beiden Trägern 5 zwei Streben 7 zur Versteifung angeordnet sind. Die Träger 5 sind als Hohlprofile ausgeführt. In den Trägern 5 sind längsverschieblich jeweils zwei Innenprofile angeordnet, die an ihrem freien Ende jeweils einen Verriegelungsmechanismus 6 tragen. Die Profile in den Trägern 5 sind mittels Langlöchern und Schrauben in einer gewünschten Länge fixierbar, um verschiedenen Breiten eines Laderaums Rechnung zu tragen.

Jeder Verriegelungsmechanismus 6 weist eine Verriegelungsnase 4 auf, die mittels einer handbetätigten Stange 9 vor- und zurückgezogen werden kann. Die Einnahme einer Grundstellung, die der Verriegelungsstellung entspricht, wird durch eine Feder bewirkt, die hier nicht sichtbar ist. Neben der Verriegelungsnase 4 sind jeweils zwei kleine Winkelbleche (nicht bezeichnet) angeordnet, um eine gute Anlage an einer die Träger tragenden, hier nicht dargestellten Führungsschiene zu gewährleisten.

Die Ladeplattform 2 weist hier zwei Stangen 9 auf, die in der Figur 1 oben und unten zwischen je zwei Verriegelungsmechanismen 6 verlaufen. Jede Stange 9 betätigt zwei Haken, die die beiden Verriegelungsnasen 4 der an der einen Seite der Ladeplattform 2 angeordneten Verriegelungsmechanismen 6 bewegen.

Die Figur 2 zeigt in einer Seitenansicht dieselbe Ladeplattform 2, wobei die Anordnung der Streben 7 deutlich erkennbar ist, die im Querschnitt kleiner ausgeführt sind als die Träger 5. Die Platte 8 liegt auf der oberen, mit Ladegut zu beladenen Seite der Ladeplattform 2 und bietet damit eine glatte Oberfläche. Die Bewegungsmöglichkeit der Stange 9 ist durch eine gestrichelte Stellung in der Figur 2 angedeutet.

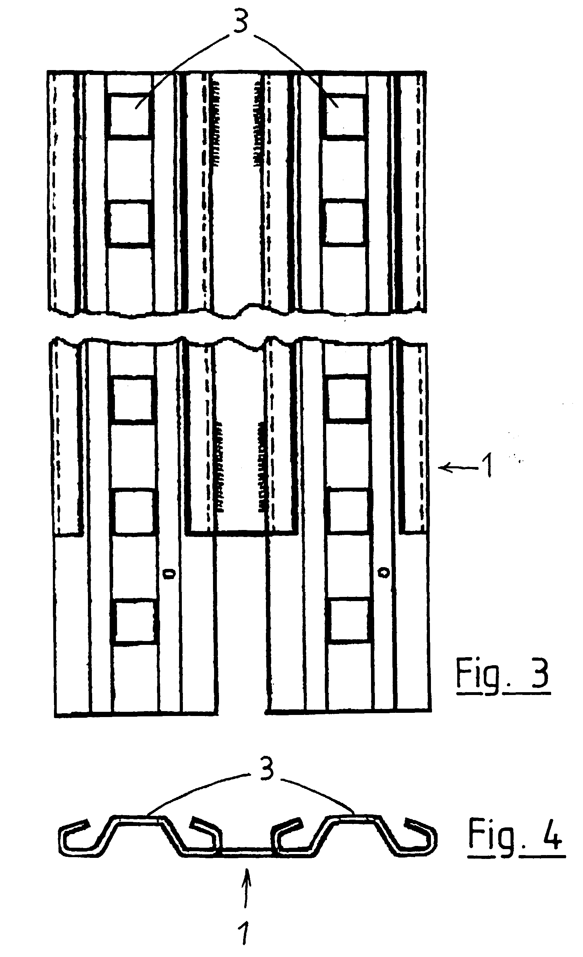

Die Figur 3 zeigt eine Draufsicht auf eine Führungsschiene 1, die in der Figur 4 im Profil dargestellt ist. Sie ist aus Stahl oder Aluminium gefertigt und besteht aus zwei nebeneinander liegenden Einzelprofilen, die durch ein Verbindungsblech (nicht bezeichnet) durch Schweißen miteinander verbunden sind. Die Führungsschiene 1 weist zwei parallele Reihen von regelmäßig beabstandet angeordneten Öffnungen 3 auf, die in der Figur 3 eine quadratische Form haben. In diese Öffnungen 3 werden die Verriegelungsnasen 4 eingeführt und darin verriegelt.

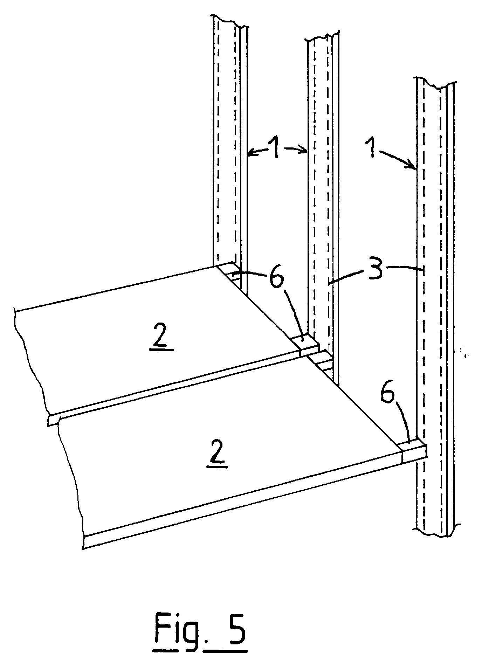

Die Figur 5 zeigt schematisch drei parallele, vertikal verlaufende Führungsschienen 1, wobei die Reihen von Öffnungen 3 nur angedeutet sind. Zwei nebeneinander liegende Ladeplattformen 2 sind mit ihren zur rechten Seite zeigenden Verriegelungsmechanismen 6 in diesen Öffnungen 3 verriegelt. Einzelheiten, wie die Stange 9 und dergleichen, sind nicht dargestellt, da nur die Anordnung der Ladeplatten an den Führungsschienen deutlich gemacht werden soll. Unter den Ladeplatten 2 befindet sich der nicht gezeichnete Laderaumboden. Die Führungsschienen 1 können zugleich als Rungen für ein Planentraggestell des Aufbaus dienen. Alternativ befindet sich hinter den Führungsschienen 1 eine Fahrzeugwand, an der die Führungsschienen 1 befestigt sind.

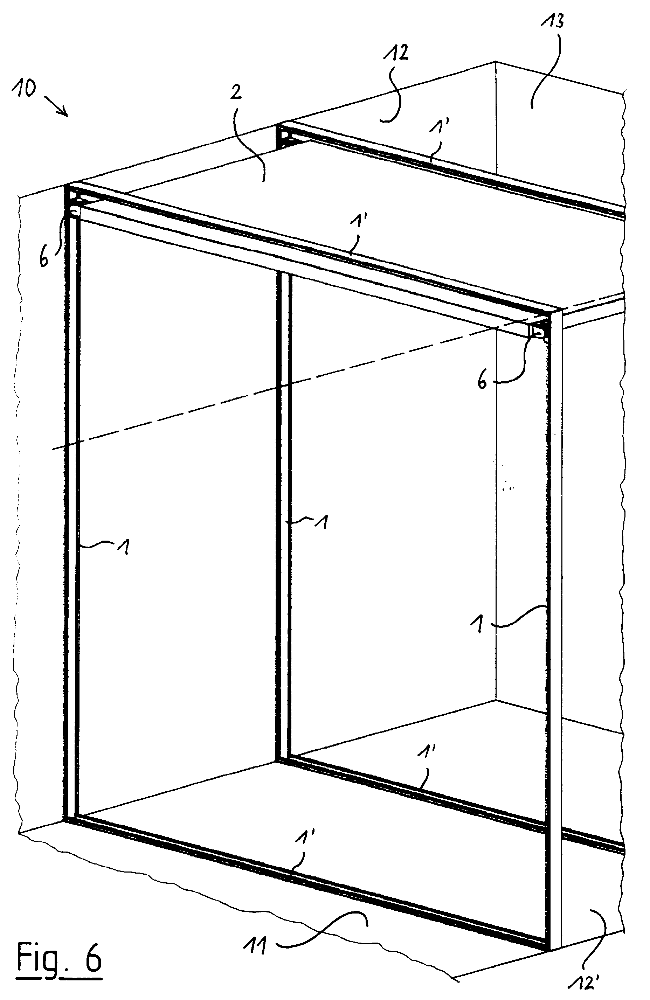

Figur 6 der Zeichnung zeigt ein Beispiel für einen Einbau 10, der hier in einem festen Fahrzeugaufbau, bestehend aus einem Laderaumboden 11, Seitenwänden 12, 12' und einer Laderaumdecke 13, angeordnet ist. Neben parallel zueinander in Vertikalrichtung verlaufenden Führungsschienen 1 besitzt der Einbau 10 hier auch zusätzliche horizontale Führungsschienen 1', die am Laderaumboden 11 und an der Laderaumdecke 13 angeordnet sind. Je zwei einander gegenüberliegende vertikale Führungsschienen 1 und zwei horizontalen Führungsschienen 1' ergänzen sich hier jeweils zu einer umlaufenden, in Ansicht quadratischen Schienenanordnung.

Weiterhin zeigt die Figur 6 eine Ladeplattform 2, die mit an ihren Ecken angebrachten Verriegelungsmechanismen 6 mit den vertikalen Führungsschienen 1 verbunden und in diesen verriegelt ist. In dem in Figur 6 gezeigten Zustand ist die Ladeplattform 2 in eine Parkstellung verschoben, wobei diese sich am oberen Ende der vertikalen Schienen 1 unmittelbar unter der Laderaumdecke 13 befindet. Damit ist der unter der Ladeplattform 2 liegende Laderaum ohne Behinderung durch die Ladeplattform 2 nutzbar, wobei lediglich ein geringer Bruchteil der Laderaumhöhe von der Ladeplattform 2 eingenommen wird.

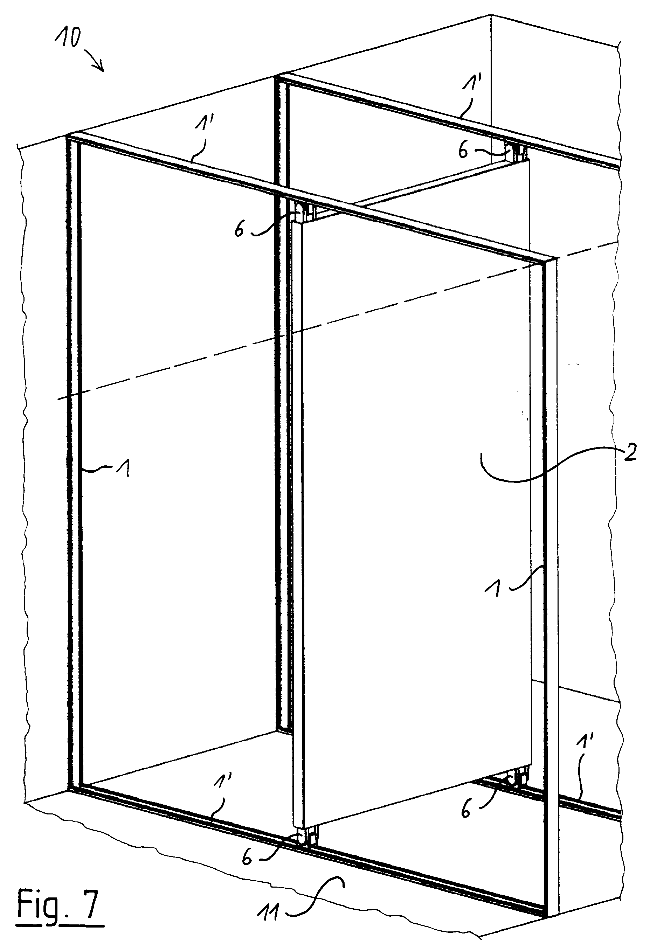

Figur 7 der Zeichnung zeigt den Einbau 10 aus Figur 6, nun mit einer in Vertikalrichtung angeordneten Ladeplattform 2. Die Ladeplattform 2 ist hierzu mit ihren Verriegelungsmechanismen 6 an den horizontalen Schienen 1' befestigt, so daß nun die Ladeplattform 2 eine Trennwand innerhalb des Laderaums bildet. Wenn die vertikalen Führungsschienen 1 und die horizontalen Führungsschienen 1' eine quadratische Schienenanordnung bilden, kann dieselbe Ladeplattform 2 sowohl horizontal wie auch vertikal innerhalb des Einbaus 10 eingebaut werden, so daß eine große Gestaltungsfreiheit erreicht wird.

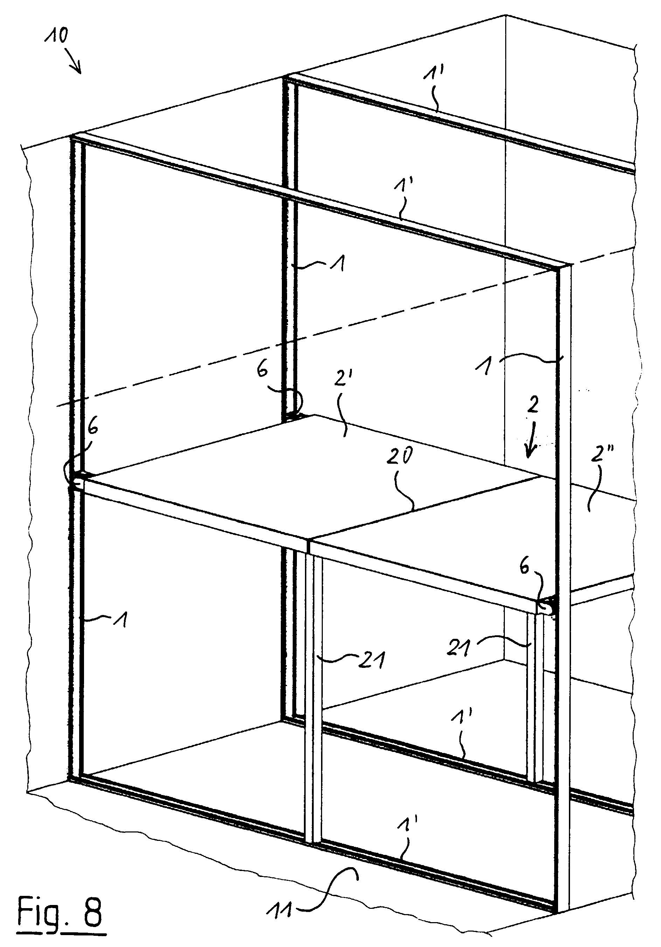

Figur 8 der Zeichnung zeigt ein Ausführungsbeispiel eines Einbaus 10, bei dem eine geteilte Ladeplattform 2 eingesetzt wird. Die Ladeplattform 2 ist hier entlang einer in Längsrichtung des Einbaus 10 verlaufenden Mittellinie 20 in zwei Hälften 2' und 2'' unterteilt. Jeder Ladeplattformteil 2', 2'' besitzt jeweils zwei Verriegelungsmechanismen 6, die in Eingriff mit zwei parallelen Führungsschienen 1 stehen. Im Bereich der Mittellinie 20 sind unter der geteilten Ladeplattform 2 zwei Beine 21 angeordnet, auf denen sich die beiden Teile 2', 2'' der Ladeplattform 2 im Bereich der Mittellinie 20 abstützen. Alternativ oder zusätzlich können auch an den beiden Teilen 2', 2'' der Ladeplattform 2 im Bereich der Mittellinie 20 lösbare Verriegelungsmittel und/oder Scharniere vorgesehen sein, die die beiden Teile 2', 2'' lösbar und/oder gelenkig miteinander verbinden, wobei dann bei nicht zu starker Belastung auf die Beine 21 verzichtet werden kann.

Die Beine 21 sind zweckmäßig gelenkig mit einem der beiden Teile 2', 2'' der geteilten Ladeplattform 2 verbunden sowie zusätzlich in ihrer Länge einstellbar, um die Ladeplattform in beliebigen Höhenlagen horizontal ausrichten zu können. Zur Sicherung der Lage der Beine 21 können diese an ihrem unteren Ende mit Eingriffsmitteln für die horizontalen Führungsschienen 1' am Laderaumboden 11 ausgestattet sein.

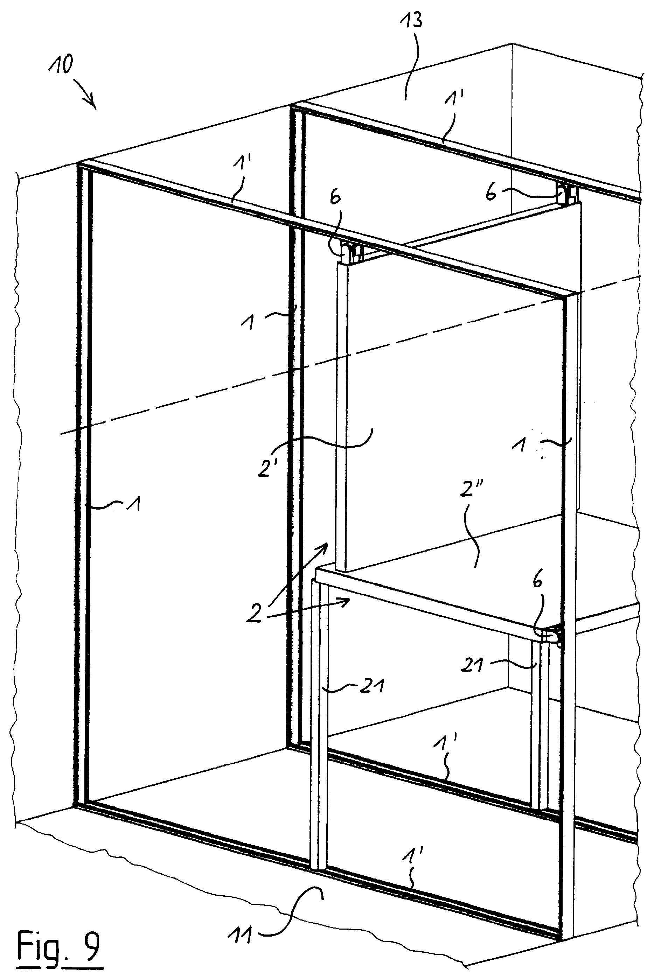

Figur 9 der Zeichnung zeigt eine Abwandlung des Einbaus gemäß Figur 8. Der in Figur 8 links angeordnete Teil 2' der Ladeplattform 2 ist nun in eine vertikale Lage überführt, wobei die Verriegelungsmechanismen 6 an dem vertikal ausgerichteten Teil 2' der Ladeplattform 2 nun mit zwei Führungsschienen 1' an der Laderaumdecke 13 verbunden sind. Entlang der nun nach unten weisenden Kante des Ladeplattformteils 2' steht dieser auf der Oberseite des weiterhin horizontal angeordneten zweiten Ladeplattformteils 2'' auf. Durch Einsatz weiterer ungeteilter oder geteilter Ladeplattformen 2 läßt sich ersichtlicherweise der Laderaum in unterschiedlichsten Anordnungen und Abwandlungen in gewünschter Weise in kleinere Abteile oder Fächer unterteilen. Damit können auch kleinere zu transportierende Gutstücke übersichtlich und leicht zugänglich im Laderaum untergebracht werden. Der Ladeplattformteil 2' oder ein weiterer Ladeplattformteil kann auch anstelle der Beine 21 unter dem horizontalen Ladeplattformteil 2'' als Stütze und Trennwand zugleich angeordnet werden.

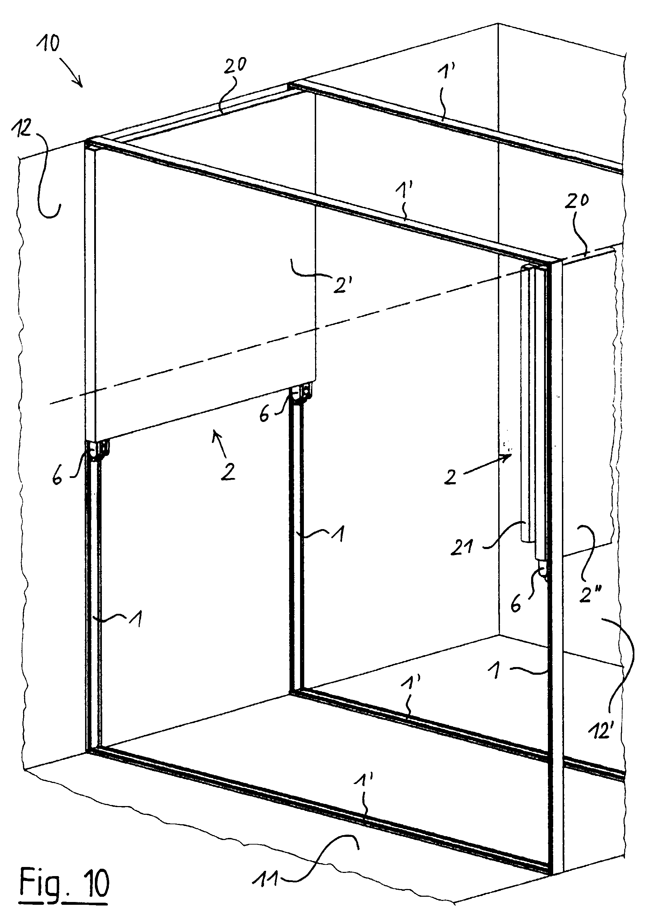

Figur 10 der Zeichnung schließlich zeigt den Einbau aus Figur 8 und Figur 9 in einer nochmals geänderten Anordnung, in der nun die beiden Ladeplattformteile 2', 2'' in eine Parkposition gebracht sind, die sie einnehmen, wenn sie nicht benötigt werden. Der erste Ladeplattformteil 2' ist nun an die in Figur 10 im Hintergrund liegende Seitenwand 12 angelegt, wobei der Ladeplattformteil 2' sich hier im oberen Teil der Seitenwand 12 befindet. Die Verriegelungsmechanismen 6 liegen an der nun unteren Kante des Ladeplattformteils 2' und halten diesen in der gezeichneten Stellung. Um ein unerwünschtes Verschwenken des Ladeplattformteils 2' nach unten auszuschließen, ist zweckmäßig an dessen nach oben weisender Kante, die der Mittellinie 20 entspricht, ein geeignetes Sicherungsmittel angebracht, das hier nicht eigens dargestellt ist. Der zweite Ladeplattformteil 2'' ist spiegelsymmetrisch an der gegenüberliegenden Seitenwand 12' angeordnet, wobei der zweite Ladeplattformteil 2'' auch hier im oberen Teil der Seitenwand 12' liegt. Zusätzlich umfaßt dieser zweite Ladeplattformteil 2'' die Beine 21, die nun in eine vertikale, parallel zur Ebene des zweiten Ladeplattformteils 2'' weisende Richtung verschwenkt sind. Auch hier erfolgt selbstverständlich eine Sicherung des zweiten Ladeplattformteils 2'' und der Beine 21 in der gezeichneten Position, wobei auch hier die dafür benutzten Sicherungsmittel nicht eigens dargestellt sind.

Zusammenfassend ist also festzustellen, daß der Einbau in seiner höchsten Ausgestaltungsstufe praktisch beliebige Unterteilungen des Laderaums in dem durch die Anordnung der Führungsschienen und durch die Größe der Ladeplattformen oder Ladeplattformteile vorgegebenen Rasternaß erlaubt. Die Ladeplattformen oder deren Teile können dabei in drei räumlichen Ausrichtungen eingesetzt werden, nämlich a) horizontal, b) vertikal in Längsrichtung des Aufbaus und c) vertikal in Querrichtung des Aufbaus.

## Patentansprüche

1. Einbau (10) für den Laderaum eines Transportfahrzeugs oder -behälters, wie Lastkraftwagen, LKW-Anhänger, Sattelauflieger, Container, Wechselbrücke oder -pritsche oder Eisenbahnwaggon, mit einem Laderaumboden (11) und mit einem von diesem randseitig aufragenden Gestell oder Aufbau (12, 12', 13) mit mehreren vertikalen Streben oder Rungen, die an ihren zum Laderaum weisenden Seiten mit oder als Führungsschienen (1) ausgebildet sind, insbesondere zur Verwendung in geschlossenen Transportfahrzeugen oder -behältern,
**dadurch gekennzeichnet**,
daß der Einbau (10) mindestens eine allgemein rechteckige Ladeplattform (2) umfaßt, die an den sich über den Laderaum gegenüberliegenden Führungsschienen (1) in vorwählbaren Höhenpositionen lösbar verriegelbar ist.

2. Einbau nach Anspruch 1, dadurch gekennzeichnet, daß zusätzlich zu den vertikalen Führungsschienen (1) quer verlaufende horizontale Führungsschienen (1') am Laderaumboden (11) und an einer Laderaumdecke (13) vorgesehen sind, die sich mit den einander gegenüberliegenden vertikalen Führungsschienen (1) jeweils zu einer geschlossenen, in einer vertikalen Ebene umlaufenden Führungsschienen-Anordnung (1, 1') ergänzen.

3. Einbau nach Anspruch 2, dadurch gekennzeichnet, daß jede Führungsschienen-Anordnung (1,1') ein Quadrat bildet.

4. Einbau nach einem der vorhergehenden Ansprüche, dadurch gekennzeichnet, daß die Ladeplattform (2) eine oberseitige oder je eine oberseitige und unterseitige flache Platte (8) und zwei diese tragende Träger (5) aufweist, die parallel zueinander und nahe und parallel zu zwei einander gegenüberliegenden, in Einbau-Querrichtung verlaufenden Kanten der Ladeplattform (2) angeordnet sind und die an ihren Enden jeweils mit den Führungsschienen (1,1') verriegelbar sind.

5. Einbau nach Anspruch 4, dadurch gekennzeichnet, daß zwischen den Trägern (5) mehrere diese verbindende Streben (7) angebracht sind.

6. Einbau nach Anspruch 4 oder 5, dadurch gekennzeichnet, daß die Träger (5) in ihrer Länge teleskopierbar und in vorwählbaren Längenpositionen festlegbar sind.

7. Einbau nach einem der vorhergehenden Ansprüche, dadurch gekennzeichnet, daß in Längsrichtung des Einbaus gesehen in einem Rasterabstand 1 jeweils zwei parallele Führungsschienen (1,1') mit je einer Reihe von Verriegelungsöffnungen (3) oder jeweils eine Führungsschiene (1,1') mit je zwei parallelen Reihen von Verriegelungsöffnungen (3) angeordnet sind/ist, wobei Verriegelungsnasen (4) an den Enden der Träger (5) der Ladeplattform (2) mit den Verriegelungsöffnungen (3) in Eingriff bringbar sind.

8. Einbau nach Anspruch 7, dadurch gekennzeichnet, daß die Länge L des Laderaums ein ganzes Vielfaches des Rasterabstands 1 beträgt, daß die Länge jeder Ladeplattform (2) mit dem Rasterabstand 1 übereinstimmt und daß jede Ladeplattform (2) an ihren den Führungsschienen (1,1') zugewandten Ecken mit den Führungsschienen (1,1') verriegelbar ist.

9. Einbau nach Anspruch 7 oder 8, dadurch gekennzeichnet, daß die Verriegelungsnasen (4) jeweils Teil eines Verriegelungsmechanismus (6) sind und daß jeweils die beiden benachbarten Verriegelungsmechanismen (6) einer Seite jeder Ladeplattform (2) mit einem unter oder in dieser verlaufenden Betätigungselement (9) zur gemeinsamen Ver- und Entriegelung verbunden sind.

10. Einbau nach Anspruch 9, dadurch gekennzeichnet, daß jeweils die Verriegelungsmechanismen (6), die an einer Seitenkante der Ladeplattform (2) angeordnet sind, um eine entlang dieser Seitenkante der Ladeplattform (2) verlaufende gemeinsame Achse A in einem Winkelbereich von wenigstens 90° verschwenkbar an dem Träger (5) angebracht sind.

11. Einbau nach Anspruch 10, dadurch gekennzeichnet, daß die Verriegelungsmechanismen (6) mit ihrer Verriegelungsnase (4) so geformt sind, daß sie in wenigstens zwei um 90° gegeneinander verdrehten Stellungen mit den Führungsschienen in Eingriff bringbar sind.

12. Einbau nach einem der vorhergehenden Ansprüche, dadurch gekennzeichnet, daß mindestens eine Ladeplattform (2) entlang einer in Einbau-Längsrichtung verlaufenden Mittellinie (20) in zwei Teile (2', 2'') geteilt ist und daß die beiden Teile (2', 2'') der Ladeplattform (2) an der Mittellinie (20) über Verriegelungsmittel lösbar miteinander verbindbar oder über wenigstens ein Scharnier gelenkig miteinander verbunden sind.

13. Einbau nach Anspruch 12, dadurch gekennzeichnet, daß die beiden Teile (2', 2'') der Ladeplattform (2) an oder nahe der Mittellinie (20) über jeweils individuelle oder gemeinsame, längeneinstellbare und verschwenkbare und/oder abnehmbare Beine (21) abstützbar sind.

14. Einbau nach einem der Ansprüche 4 bis 13, dadurch gekennzeichnet, daß die Platte (8) eine Blechplatte oder eine Kunststoffplatte, vorzugsweise eine Kunststoff-Wabenplatte, ist.
